# EUROPEAN PATENT SPECIFICATION

(11) **EP 2 653 371 B1**
(45) Date of publication and mention of the grant of the patent: **08.04.2015**
(21) Application number: 12382150.6
(22) Date of filing: 17.04.2012
(51) Int. Cl.: B62K 19/06, B62M 6/90

(54) **Frame with an integrated battery for a pedal-assist bicycle and process for producing said frame**
Rahmen mit einer integrierten Batterie für ein Fahrrad mit Pedalunterstützung und Verfahren zur Herstellung des besagten Rahmens
Cadre avec batterie intégrée pour une bicyclette à pédalage assisté et procédé pour produire ce châssis

(43) Date of publication of application: 23.10.2013
(73) Proprietor: BHBIKES EUROPE, S.L., 01015 Vitoria-Gasteiz (Alava) (ES)
(72) Inventor: Beistegui Chirapozu, José, Luis, 01015 VITORIA-GASTEIZ (Alava) (ES); Cunado Landa, Javier, 01015 VITORIA-GASTEIZ (Alava) (ES)
(74) Representative: Carpintero Lopez, Francisco

(56) References cited:
- WO-A1-99/59865
- WO-A1-2008/106976
- DE-U1-202008 009 933
- DE-U1-202011 000 601
- US-B1- 7 393 125

## Description

### Technical Field of the Invention

A first aspect of the present invention relates to a frame with an integrated battery for a pedal-assist bicycle, and a second aspect relates to a process for producing said frame, said invention having an application in the technical field of the pedal-assist bicycles using an auxiliary electric motor and, particularly, in the field of frames for such bicycles that can have electric batteries powering the electric motor, which allows improving the coupling and the integration between the battery and the frame, as well as increasing the options for arranging and fixing the down tube in the frame and simplifying the manufacturing process, with the subsequent cost reduction this entails.

### Background of the Invention

Pedal-assist bicycles using an electric motor are known today, the structure of such bicycles largely being very similar to that of conventional bicycles, with a frame comprising a steering tube in which the shaft of the handlebar rotates, a seat tube in the upper part of which the saddle post is housed and in the lower part of which the bottom bracket shell is located. The frame of both types of bicycles likewise comprises a down tube, also called the main tube, attaching the steering tube with the seat tube, usually in the area close to the bottom bracket shell of the seat tube, i.e., in its lower area.

In pedal-assist bicycles, the electric motor can be assembled on the bottom bracket shaft, in the rear sprocket or in the front sprocket. The electric battery powering the motor, a single battery or a battery pack or set of batteries being understood as such, is typically a rather bulky element and is usually fixed in the seat tube, the carrier and even in the down tube, this latter location being particularly advantageous because the down tube is itself usually the most robust and bulkiest of all the elements forming the bicycle frame. An example of frames of this type can be found in international patent application number WO-2008/106976-A1, which discloses the features of the preamble of claim 1.

Given the battery operating conditions and recharging conditions, one of the required functions in bicycles of this type is that the battery can be readily disassembled from and assembled on the frame, for the purpose of enabling charging it anywhere, for example at the user's home, without having to take the entire bicycle to the place for charging the battery. This aspect is also desirable for the purpose of reducing the weight of the bicycle when it is going to be used in a conventional manner, i.e., without using the pedal-assist function.

German utility model number DE-202011000601-U1 describes a frame for pedal-assist bicycles in which the battery is integrated by adapting it longitudinally to the shape of the down tube, obtaining an assembly in which the battery blends in with the tube, i.e., in which with the exception of its weight, the battery goes virtually unnoticed. Nevertheless, despite the fact that this is a good solution, it does present some aspects that can be improved and optimized.

The main drawback of this frame is because of the fact that the down tube is obtained by means of extrusion, usually in the sector of extruded aluminum, subsequently being bent to adopt a slight curve in the end area of the down tube. However, aluminum has a certain shape memory effect, such that once it is extruded it retains a certain shape memory with respect to its original straight shape, resulting in the part to be bent having a certain tendency to return to the initial straight shape. On the other hand, this shape memory effect does not occur with the battery casing, which is usually made of a plastic material and in any case would not require being bent, such that it has a completely stable outer shape. Therefore the tendency of the aluminum section to slowly recover its initial straight shape and the stability of the plastic forming the battery casing make the coupling of both parts have certain allowances once the frame is already in use, being counterproductive in the interest of the final finish of the product.

On the other hand, although said frame integrates the battery such that it goes virtually unnoticed, said integration is not done optimally, whereby the space occupied by the battery in the assembly of the frame is still quite considerable.

Likewise, given the superposition in said frame between the battery and the down tube, the latter having a curved but uniform configuration, i.e., its cross-section barely varies beyond the effects of the curves for defining the cavity in which the battery is arranged, it is necessary to arrange detachable auxiliary elements on the down tube in the areas of confluence with the seat tube and the steering tube. In this sense, it can be seen how the frame described in said German utility model comprises a box, between the side walls of which there extends a transverse shaft against the lower part, an upward front end part of an appendage emerging from the front of the battery being supported on said transverse shaft when the battery is assembled; all these elements resulting in considerable complexity and cost increase of the frame. Furthermore, the location of the box in the confluence of the down tube with the steering tube is necessary given that it serves as reinforcement of the meeting area of these two elements, since said area is subjected to considerable stresses and, therefore, one of the areas with highest possibility of breaking, so the arrangement of said box is absolutely essential.

### Description of the Invention

A first aspect of the present invention as disclosed in claim 1, relates to a frame with an integrated battery for a pedal-assist bicycle, comprising a seat tube and a steering tube attached by a down tube; fixing means for removably coupling a battery casing in the down tube, as well as preferably an electronic control unit typically used in bicycles of this type.

According to the invention, the down tube is an extruded section preferably made of aluminum, longitudinally comprising a straight portion and a curved portion, where the down tube comprises a transverse inner partition running longitudinally along the entire section and internally splitting it in two, such that in the straight portion the section has a hollow corresponding to a cap of the down tube, which corresponds with the contour of the section located on one side of the transverse inner partition, the battery casing being able to be coupled in said hollow, said battery casing being flush with the contour of the down tube when it is in said coupled position.

The down tube in the case of the invention, like in the case of German utility model number DE-202011000601-U1, is obtained by extrusion. The difference is that in said earlier utility model the entire tube was bent after extrusion and hence the "shape memory" effect and the fact that it later gives rise to misalignments between the down tube, which is unstable, and the battery casing, which is stable.

The down tube according to the frame of the present invention also obtained by extrusion has a straight portion and another curved portion. The straight portion is stable because it was not necessary to bend it, such that it does not have to memorize a different earlier shape, because the initial shape is maintained. Said straight portion, which is a stable area, is where the cutting is done to enable a hollow or housing for the location of the battery casing, such that the coupling is between two completely stable geometries.

The possibility that the transverse inner partition is curved according to a cross-section of the section is contemplated, such that the outer face of the transverse inner partition in the area corresponding to the hollow is concave and formed as an upper support surface of a lower support surface comprised by the battery casing.

One of the objectives of the coupling between the down tube and the battery casing is that the latter is concealed as much as possible, i.e., that it is barely noticed, and this is achieved by means of the tongue and groove coupling occurring between the lower support surface, or lower base, of the battery casing penetrating the down tube itself. This occurs because the down tube has a transverse inner partition curved sharply inwards which corresponds with the same convex geometry of the lower support surface of the battery casing in its coupling area.

It is also contemplated that the down tube can be attached to either the seat tube or steering tube through the curved portion.

A second aspect of the invention relates to a process for producing a frame such as that described above, such that the process comprises obtaining a down tube by means of extrusion of a metal section preferably made of aluminum. According to the invention said extrusion comprises obtaining a section comprising a transverse inner partition curved according to a cross-section of the section, running longitudinally along the entire section and internally splitting it in two, the process comprising bending said section until obtaining a straight portion and a curved portion, and then forming a hollow in the straight portion by means of removing a cap from the down tube, which corresponds with the contour of the section located in the concave side of the transverse inner partition.

Attaching the down tube to either the seat tube or steering tube is then contemplated.

Therefore, according to the invention, the down tube is obtained by means of an extruded section which is subsequently curved or bent at one end to obtain a down tube with a straight portion and a curved portion.

Once the end of the down tube is bent, in its straight portion respective longitudinal cuts and respective transverse cuts are made to remove the cap. The battery casing, the outer shape of which fits within the portion of removed section, i.e., the cap, is coupled in the hollow or gap that is made.

The manufacture of the frame is thereby simpler, with a single section, from which the cap is removed to define the gap in the straight portion and does not require inserts for defining the gap, with the subsequent complexity this entails. As it is used herein, the term battery comprises both a single battery and battery packs which can have the described configuration or be comprised in bodies or casings having such configuration.

Therefore, the invention improves the coupling between the down tube and the battery casing, given that since the hollow is located in a straight sector that need not be bent, the shape memory effect that caused shape recovery and misalignments in the coupling between the battery casing and section do not occur in said area.

On the other hand, given the concave configuration of the transverse inner partition, the battery casing is better integrated in the section and the use of spaces is optimized. The down tube has a section which allows integrating part of the battery casing inside it, i.e., the battery casing is not superimposed on the section, but part of it is housed inside the section of the down tube.

From an assembly viewpoint, the hollow can be made wherever it is needed such that it provides the exact space for housing the battery casing, without requiring auxiliary elements or parts to fill in the gap existing between the steering tube and seat tube, or for coupling and assembling the battery casing in said additional elements.

The production process is also simplified, with the subsequent cost reduction this entails.

Therefore, according to the described invention the frame with an integrated battery for a pedal-assist bicycle, as well as the process for producing said frame, proposed by the invention is an advance in frames and processes for manufacturing them used up until now and solves in a fully satisfactory manner the drawbacks explained above in that it allows improving the coupling and integration between the battery casing and the frame and increasing the options for arranging and fixing the down tube in the frame and simplifying the manufacturing process thereof, with the subsequent cost reduction this entails.

### Description of the Drawings

To complement the description that is being made and for the purpose of aiding to better understand the features of the invention according to a preferred practical embodiment thereof, a set of drawings is attached as an integral part of said description, where the following has been depicted with an illustrative and non-limiting character:

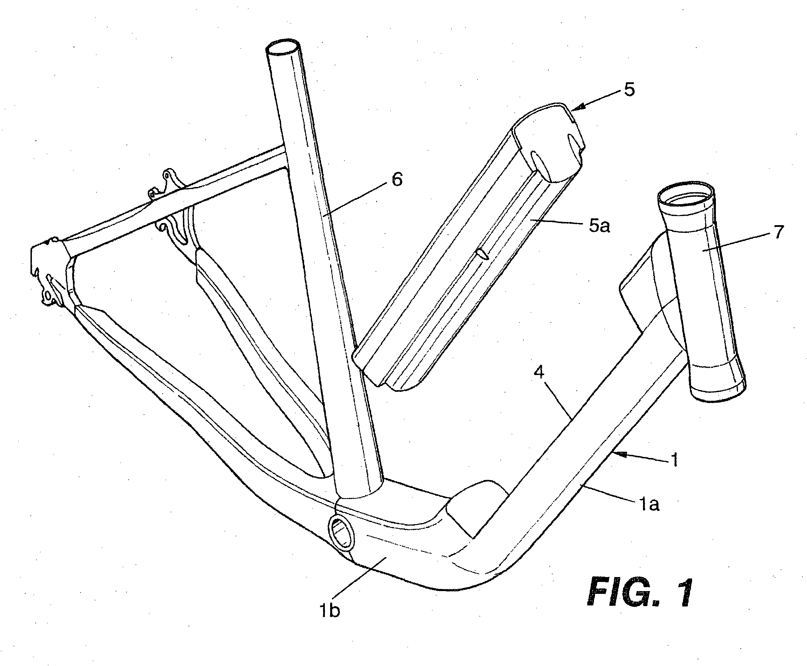

Figure 1 shows a perspective view of the frame of the invention with the battery decoupled from the down tube from a front upper perspective.

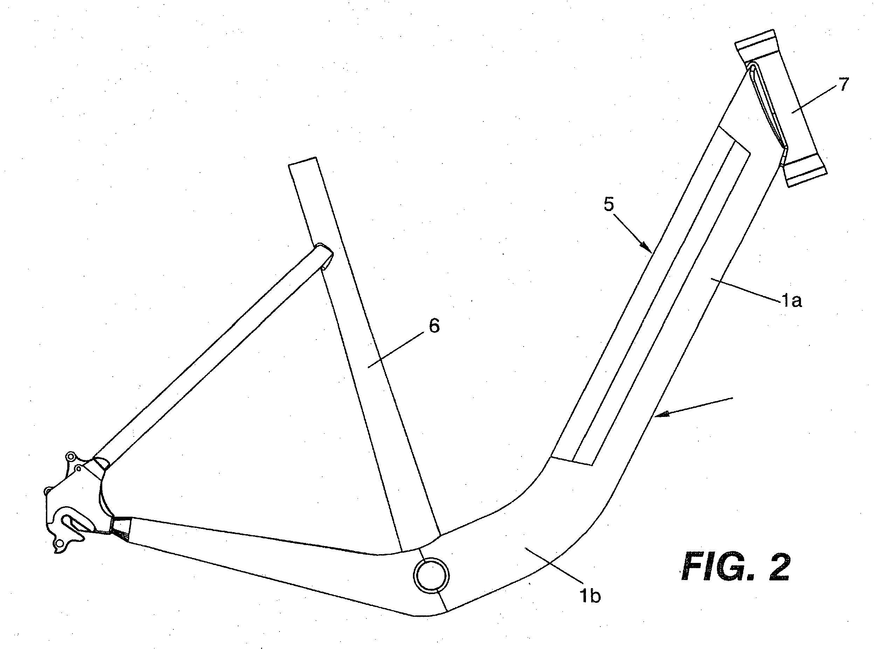

Figure 2 shows a cross-section view of the frame depicted in Figure 1, with the battery coupled to the straight portion of the down tube, in which said down tube is attached to the steering tube by its straight portion.

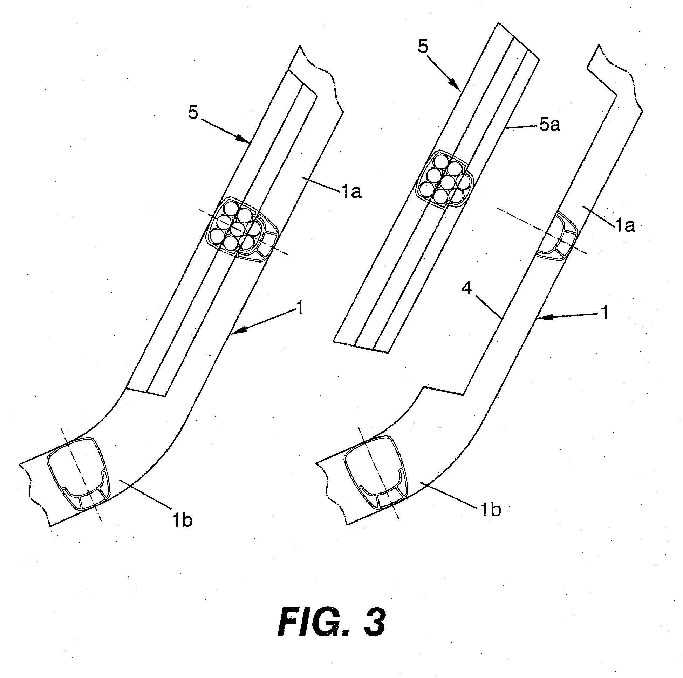

Figure 3 shows two schematic cross-section views, depicting the battery coupled and decoupled, as well as the cross-sections of the straight portion and the curved portion.

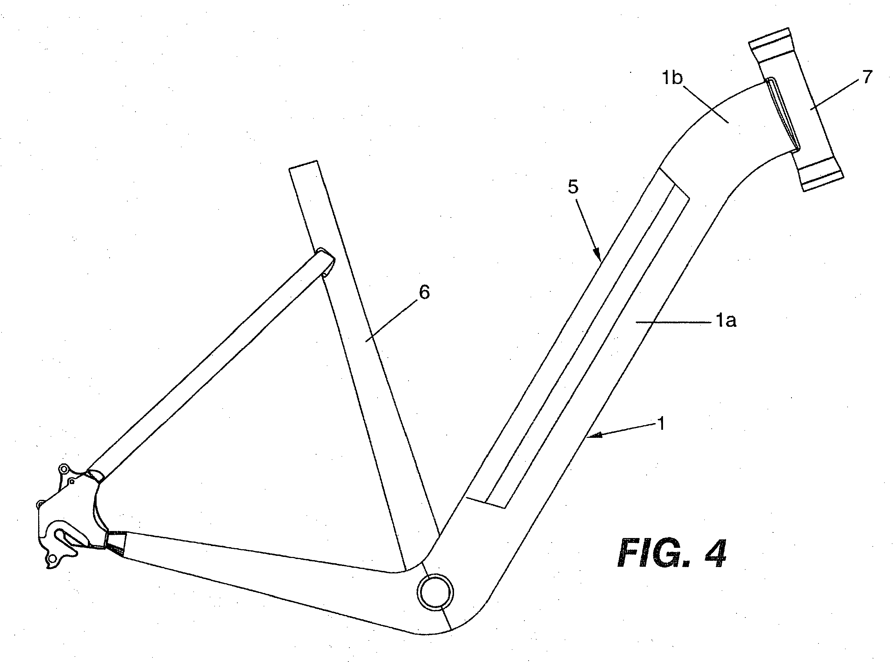

Figure 4 shows a cross-section view of a variant of the frame depicted in Figure 2, where the down tube is attached to the steering tube by its curved portion.

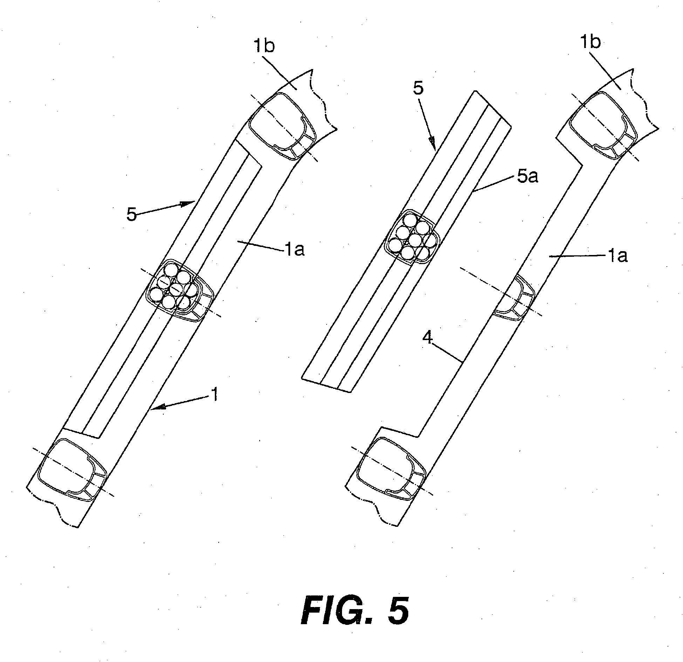

Figure 5 shows two views like those of Figure 3 of the variant of the frame depicted in Figure 4.

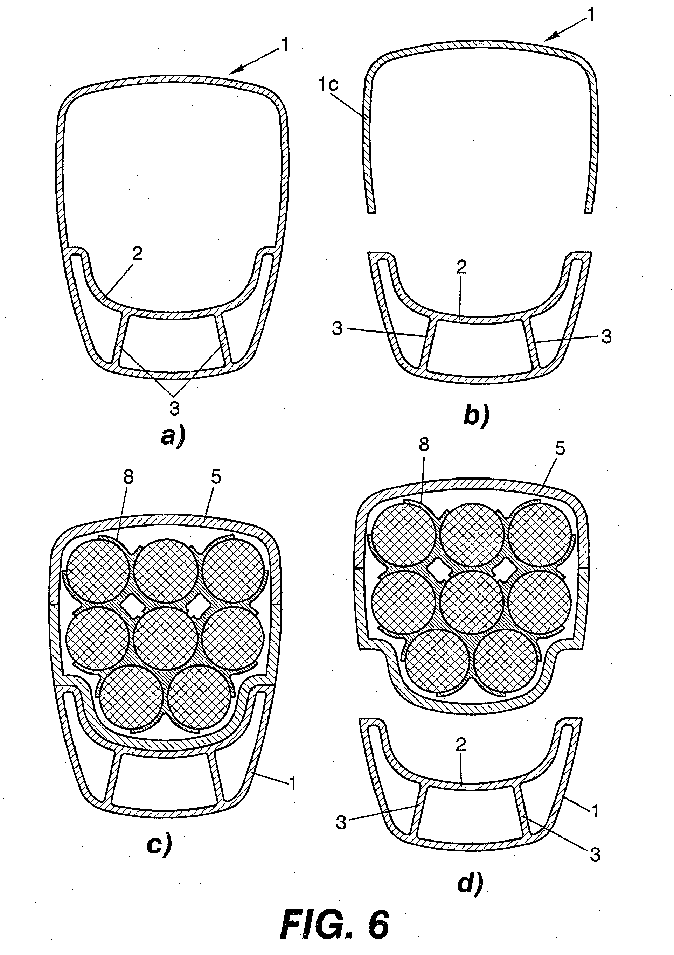

Figure 6 shows four schematic views depicting four cross-sections of the down tube and the battery casing according to different phases of the process for producing the frame, where view a) corresponds to the tube obtained after extrusion; view b) corresponds to the tube of view a) in which the upper cap has been removed, the gap serving to house the battery casing thereby being defined; view c) corresponds to the battery casing coupled to the down tube, in which it can be seen how the contour of the coupled assembly corresponds to that of the extruded section depicted in view a); the assembly of view c) in the decoupled position having been depicted in view d).

### Embodiment Preferred of the Invention

In view of the described figures, it can be observed how in one of the possible embodiments of the invention the frame with an integrated battery for a pedal-assist bicycle proposed by the invention comprises a seat tube (6) and a steering tube (7) attached by a down tube (1); fixing means for removably coupling a battery casing (5) in the down tube (1).

According to the invention, the down tube (1) is an extruded aluminum section longitudinally comprising a straight portion (1a) and a curved portion (1b), where the down tube (1) comprises a transverse inner partition (2) running longitudinally along the entire section and internally splitting it in two, such that in the straight portion (1a) the section has a hollow corresponding to a cap (1c) of the down tube (1), which corresponds with the contour of the section located on one side of the transverse inner partition (2), the battery casing (5) being able to be coupled in said hollow, said battery casing (5) being flush with the contour of the down tube (1) when it is in said coupled position.

The transverse inner partition (2) is curved according to a cross-section of the section, such that the outer face of the transverse inner partition (2) in the area corresponding to the hollow is concave and formed as an upper support surface (4) of a convex lower support surface (5a) comprised by the battery casing (5). The down tube (1) can be attached to either the seat tube (6) or steering tube (7) through the curved portion (1b). The down tube (1) also comprises two longitudinal inner partitions (3) acting as reinforcements, being structural elements providing the down tube (1) with the necessary strength. They are located under the transverse inner partition (2) and converge towards the base of coupling.

A second aspect of the invention relates to a process for producing a frame like the one described above, such that the process comprises obtaining a down tube (1) by means of extrusion of a metal aluminum section. According to the invention, said extrusion comprises obtaining a section comprising a transverse inner partition (2) curved according to a cross-section of the section, running longitudinally along the entire section and internally splitting it in two, the process comprising bending said section until obtaining a straight portion (1 a) and a curved portion (1b), and then forming a hollow in the straight portion (1a) by means of removing a cap (1c) from the down tube (1), which corresponds with the contour of the section located on the concave side of the transverse inner partition (2).

The down tube (1) is then attached to either the seat tube (6) or steering tube (7) through the curved portion (1b). In other words, the down tube (1) can be welded indistinctly to the seat tube (6) or to the steering tube (7). The coupling to the seat tube (6) or to the steering tube (7) is done through the curved portion (1b), whereby increasing the options for arranging and fixing the down tube (1) in the frame, with the improvements that this entails from a viewpoint of versatility and stock and production costs.

Therefore, according to the invention, the down tube (1) is obtained by means of an extruded section which is subsequently curved or bent at one end to obtain a down tube (1) with a straight portion (1a) and a curved portion (1b). When the down tube (1) exits the extruder, it has along its entire length the section depicted in Figure 6a), i.e., it is basically a trapezoidal-shaped section with curved faces and corners, it has a transverse inner partition (2) with a sharp curve towards the smaller base and two longitudinal inner partitions (3) forming structural reinforcements. The straight portion (1a) maintains this shape and the curved portion (1b) basically does as well although the curving logically modifies the section somewhat in terms of its dimensional aspect.

Once the end of the down tube (1) is bent, respective longitudinal cuts and respective transverse cuts are made in its straight portion (1 a) to remove the cap (1 c). The battery casing (5), the outer shape of which fits within the portion of removed section, i.e., the cap (1 c), is coupled in the hollow or gap that is made.

The cuts made in the down tube (1) to obtain the gap for the battery casing (5) are diagonal cuts and, specifically, they are cuts converging towards the inside of the tube.

As can be observed in the cross-section drawings, the battery casing is partially housed in the section such that the use of spaces is optimal, being flush with the rest of the section that does not house the battery casing (5). There are cells (8) inside the battery for assembling the group of units forming the battery.

In view of this description and set of drawings, the person skilled in the art will understand that the embodiments of the invention that have been described can be combined in a number of ways within the object of the invention. The invention has been described according to several preferred embodiments thereof, but for the person skilled in the art it will be obvious that a number of variations can be introduced in said preferred embodiments without exceeding the object of the claimed invention.

## Claims

1. Frame with an integrated battery for a pedal-assist bicycle, comprising a seat tube (6) and a steering tube (7) attached by a down tube (1);
fixing means for removably coupling a battery casing (5) in the down tube (1);
**characterized in that**
the down tube (1) is an extruded section longitudinally comprising a straight portion (1a) and a curved portion (1b), where the down tube (1) comprises a transverse inner partition (2) running longitudinally along the entire section and internally splitting it in two, such that in the straight portion (1 a) the section has a hollow corresponding to a cap (1 c) of the down tube (1), which corresponds with the contour of the section located on one side of the transverse inner partition (2), the battery casing (5) being able to be coupled in said hollow, said battery being flush with the contour of the down tube (1) when it is in said coupled position, wherein the transverse inner partition (2) is curved according to a cross-section of the section, such that the outer face of the transverse inner partition (2) in the area corresponding to the hollow is concave and formed as an upper support surface (4) of a lower support surface (5a) comprised by the battery casing (5), the down tube (1) further comprising two longitudinal inner partitions (3).

2. Frame according to claim 1, wherein the down tube (1) can be attached to either the seat tube (6) or steering tube (7) through the curved portion (1 b).

3. Process for producing a frame according to any of the preceding claims, which comprises obtaining a down tube (1) by means of extrusion of a metal section, **characterized in that** said extrusion comprises obtaining a section comprising a transverse inner partition (2) that is curved according to a cross-section of the section, running longitudinally along the entire section and internally splitting it in two, comprising the process bending said section until obtaining a straight portion (1 a) and a curved portion (1b), and then forming a hollow in the straight portion (1 a) by means of removing a cap (1c) from the down tube (1), which corresponds with the contour of the section located on the concave side of the transverse inner partition (2).

4. Process according to claim 3, which additionally comprises attaching the down tube (1) to either the seat tube (6) or steering tube (7) through the curved portion (1b).

## Patentansprüche

1. Rahmen mit einer integrierten Batterie für ein pedalunterstütztes Fahrrad, mit:
einem Sitzrohr (6) und einem Lenkrohr (7), die durch ein Unterrohr (1) angebracht sind;
einer Befestigungseinrichtung zum lösbaren Koppeln eines Batteriegehäuses (5) in dem Unterrohr (1);
**dadurch gekennzeichnet, dass**
das Unterrohr (1) ein extrudierter Bereich ist, der längs einen geraden Abschnitt (1a) und einen gekrümmten Abschnitt (1b) aufweist, wobei das Unterrohr (1) eine innere Querpartition (2) aufweist, die längs entlang des gesamten Bereichs verläuft und ihn im Inneren zweiteilt, so dass der Bereich in dem geraden Abschnitt (1a) einen Hohlraum entsprechend einer Kappe (1c) des Unterrohrs (1) hat, der der Kontur des Bereichs entspricht, der sich an einer Seite der inneren Querpartition (2) befindet, wobei das Batteriegehäuse (5) dazu in der Lage ist, in dem Hohlraum gekoppelt zu sein, wobei die Batterie bündig mit der Kontur des Unterrohrs (1) ist, wenn sie an der gekoppelten Position ist, wobei die innere Querpartition (2) gemäß einem Querschnitt des Bereichs so gekrümmt ist, dass die Außenseite der inneren Querpartition (2) in dem Areal entsprechend dem Hohlraum konkav und als eine obere Stützfläche (4) einer unteren Stützfläche (5a) ausgebildet ist, die das Batteriegehäuse (5) aufweist, wobei das Unterrohr (1) des Weiteren zwei innere Längspartitionen (3) aufweist.

2. Rahmen gemäß Anspruch 1, wobei das Unterrohr (1) entweder an dem Sitzrohr (6) oder dem Lenkrohr (7) durch den gekrümmten Abschnitt (1b) angebracht werden kann.

3. Verfahren zum Herstellen eines Rahmens gemäß einem der vorherigen Ansprüche, das ein Bereitstellen eines Unterrohrs (1) mittels Extrusion eines Metallbereichs aufweist, **dadurch gekennzeichnet, dass** die Extrusion ein Bereitstellen eines Bereichs aufweist, der eine innere Querpartition (2) aufweist, die gemäß einem Querschnitt des Bereichs gekrümmt ist, längs entlang des gesamten Bereichs verläuft und ihn im Inneren zweiteilt, wobei es einen Prozess zum Biegen des Bereichs aufweist, bis ein gerader Abschnitt (1a) und ein gekrümmter Abschnitt (1b) erhalten werden, und dann ein Ausbilden eines Hohlraums in dem geraden Abschnitt (1a) mittels eines Entfernens einer Kappe (1c) von dem Unterrohr (1), der der Kontur des Bereichs entspricht, der sich an der konkaven Seite der inneren Querpartition (2) befindet.

4. Verfahren gemäß Anspruch 3, das zusätzlich ein Anbringen des Unterrohrs (1) entweder an dem Sitzrohr (6) oder dem Lenkrohr (7) durch den gekrümmten Abschnitt (1b) aufweist.

## Revendications

1. Cadre avec une batterie intégrée pour une bicyclette à pédalage assisté, comprenant
un tube de selle (6) et un tube de direction (7) fixés par un tube descendant (1) ;
un moyen de fixation destiné à coupler de manière amovible un boîtier de batterie (5) dans le tube descendant (1) ;
**caractérisé en ce que**
le tube descendant (1) est un tronçon extrudé longitudinalement comprenant une partie droite (1 a) et une partie incurvée (1b), où le tube descendant (1) comprend une cloison intérieure transversale (2) s'étendant longitudinalement le long de la totalité du tronçon et le divisant intérieurement en deux, de sorte que, dans la partie droite (1 a), le tronçon ait un creux correspondant à un capuchon (1c) du tube descendant (1), qui correspond au contour du tronçon situé sur un côté de la cloison intérieure transversale (2), le boîtier de batterie (5) étant apte à être couplé dans ledit creux, ladite batterie affleurant le contour du tube descendant (1) lorsqu'elle est dans ladite position couplée, où la cloison intérieure transversale (2) est incurvée selon une section transversale du tronçon, de sorte que la face extérieure de la cloison intérieure transversale (2) dans la zone correspondant au creux soit concave et formée en tant que surface de support supérieure (4) d'une surface de support inférieure (5a) constituée par le boîtier de batterie (5), le tube descendant (1) comprenant en outre deux cloisons intérieures longitudinales (3).

2. Cadre selon la revendication 1, dans lequel le tube descendant (1) peut être fixé soit au tube de selle (6) ou au tube de direction (7) par l'intermédiaire de la partie incurvée (1b).

3. Procédé de production d'un cadre selon l'une des revendications précédentes, qui comprend le fait d'obtenir un tube descendant (1) par extrusion d'un tronçon métallique, **caractérisé en ce que** ladite extrusion comprend le fait d'obtenir un tronçon comprenant une cloison intérieure transversale (2) qui est incurvée selon une section transversale du tronçon, s'étendant longitudinalement le long de la totalité du tronçon et le divisant intérieurement en deux, le processus comprenant le fait de courber ledit tronçon jusqu'à l'obtention d'une partie droite (1 a) et d'une partie incurvée (1b), et ensuite de former un creux dans la partie droite (1 a) par retrait d'un capuchon (1 c) du tube descendant (1), qui correspond au contour du tronçon situé sur le côté concave de la cloison intérieure transversale (2).

4. Procédé selon la revendication 3, qui comprend en outre le fait de fixer le tube descendant (1) soit au tube de selle (6) ou au tube de direction (7) par l'intermédiaire de la partie incurvée (1b).
